# EUROPEAN PATENT APPLICATION

(11) **EP 4 538 100 A1**
(43) Date of publication of application: **16.04.2025**
(21) Application number: 24191929.9
(22) Date of filing: 31.07.2024
(51) Int. Cl.: B60L 53/12, B60L 53/126, B60L 58/12, G01C 21/34, H02J 50/10

(54) **VEHICLE FOR WIRELESS CHARGING WHILE DRIVING AND A ROAD-BASED WIRELESS CHARGING APPARATUS.**

(30) Priority: 20.09.2023 KR 20230125748; 20.09.2023 KR 20230125749
(71) Applicant: Hyundai Mobis Co., Ltd., Gangnam-gu Seoul 06141 (KR)
(72) Inventor: SON, Dae Gon, 07030 Seoul (KR)
(74) Representative: Frenkel, Matthias Alexander

(57) **Abstract**

A vehicle for wireless charging and a method therefor, and an apparatus for wireless charging and a method therefor, are provided. The vehicle for wireless charging includes: a wireless power receiver to wirelessly receive power from a wireless power transmitter; a transceiver to communicate with the wireless power transmitter; and a controller to: control the wireless power receiver; detect a battery charging state and determine whether wireless charging is needed while driving the vehicle; search for or determine an optimal driving speed for wireless charging while driving the vehicle; and perform wireless charging while driving the vehicle at the searched speed or the determined optimal driving speed.

## Description

### CROSS-REFERENCE TO RELATED APPLICATION(S)

This application claims the benefit under Korean Patent Application No. 10-2023-0125748, filed on September 20, 2023 and Korean Patent Application No. 10-2023-0125749, filed on September 20, 2023, in the Korean Intellectual Property Office, the entire disclosures of which are hereby incorporated by reference for all purposes.

### BACKGROUND

### 1. Field

The embodiments of the present disclosure relate to a vehicle for wireless charging and a method for the same, and more particularly to an apparatus and method for increasing the efficiency of wireless charging.

### 2. Description of the Related Art

As technology of electric vehicles and technology of autonomous driving have rapidly developed, it is expected that various occupants (hereinafter referred to as "users") will be able to engage in various activities within the vehicle. For example, a user may be a fallback-ready user (FRU) and thus be able to watch video or moving images or participate in video conferences, as long as he or she remains aware of the vehicle's surroundings and can be ready for fallback.

With the advent of the autonomous driving era, various sensors are being installed within vehicles. For example, cameras, microphone sensors, and heat detection sensors may be installed to check objects within the vehicle.

It is expected that infrastructure will be introduced to enable wireless charging of autonomous driving vehicles while driving through various sensors, wireless communication devices, or the like.

Within the above-described environment, since wireless charging is performed while the vehicle is driving, it is necessary to consider wireless charging efficiency with respect to specifications and capabilities of a wireless power transmitter, the driving speed and location of the vehicle, and the like.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An object of the present disclosure is to provide a vehicle for wireless charging and a method for the same.

Another object of the present disclosure is to provide a method for increasing wireless charging efficiency of a vehicle that is driving on a road.

Technical subjects to be solved by the present disclosure are not limited to the above-mentioned technical solutions, and it should be noted that other technical subjects not described above can be understood by those skilled in the art from the description of the present disclosure below.

In a general aspect of the disclosure, a vehicle for wireless charging, includes: a wireless power receiver configured to wirelessly receive power from a wireless power transmitter; a transceiver configured to communicate with the wireless power transmitter; and a controller configured to: control the wireless power receiver; detect a battery charging state and determine whether wireless charging is needed while driving the vehicle; search for or determine an optimal driving speed for wireless charging while driving the vehicle; and perform wireless charging while driving the vehicle at the searched speed or the determined optimal driving speed.

The controller may be further configured to determine whether wireless charging is needed based additionally on a driving route configured for the vehicle.

The optimal driving speed may be determined based on at least one of the battery charging state, a wireless power reception efficiency, or a combination thereof.

In response to the vehicle not entering a wireless charging road, the controller may be further configured to search for an optimal detour route to the wireless charging road while driving, and sets the optimal detour route as a route for the vehicle
The controller may be further configured to identify a driving speed range in which wireless charging is supported while driving based on capability information of the wireless charging transmitter for wireless charging.

The controller may be further configured to: control driving of the vehicle by setting an upper speed limit within the identified driving speed range according to an initial driving speed; receive reference wireless power from the wireless charging transmitter while driving; and measure wireless power reception efficiency based on the reference wireless power.

The controller may be further configured to: measure wireless charging reception efficiency using the reference wireless power while driving at driving speed which is adjusted downward by a predetermined amount until the driving speed reaches the lower speed limit within the identified driving speed range; and perform pairing of the driving speed and information related to the wireless power reception efficiency at the driving speed, and store the paired information.

The controller may be further configured to: detect a driving speed at which wireless power reception efficiency is at a maximum from information related to the driving speed and the wireless power reception efficiency; and control the vehicle to perform wireless charging while driving at the detected driving speed.

In another general aspect of the disclosure, a method for wirelessly charging a vehicle, includes: detecting a battery charging state and determining whether wireless charging is needed while driving the vehicle; searching for or determining an optimal driving speed for wireless charging while driving the vehicle; and performing wireless charging while driving the vehicle at the searched or determined driving speed.

The determining of whether wireless charging is needed while driving the vehicle may be performed based on a driving route configured for the vehicle.

In another general aspect of the disclosure, a vehicle for wireless charging, includes: a wireless power receiver configured to wirelessly receive power from a wireless power transmitter; a transceiver configured to communicate with the wireless power transmitter; and a controller configured to: control a sensor and the wireless power receiver; determine whether the vehicle has entered a wireless charging road that is supported through the sensor; in response to the vehicle entering the wireless charging road, detect a battery charging state and determine whether wireless charging is needed based on the detected battery charging state; and transmit a charging request to the wireless power transmitter for wireless charging, wherein the charging request includes information related to the wireless power receiver, the battery charging state, or a combination thereof.

In yet another general aspect of the disclosure, an apparatus for wireless charging, includes: a wireless power transmitter configured to wirelessly transmit power to a wireless charging vehicle on a wireless charging road; a transceiver configured to communicate with the wireless charging vehicle; and a controller configured to: control the wireless power transmitter and the transceiver; determine power transmission parameters based on information related to a wireless power receiver of the wireless charging vehicle; obtain information related to a driving speed and location of the wireless charging vehicle; and determine a wireless power transmission group based on information related to the wireless power receiver of the wireless charging vehicle, the driving speed and location of the wireless charging vehicle, or a combination thereof, wherein the wireless power transmission group includes at least one wireless power transmitter.

The controller may be further configured to perform wireless charging based on the wireless power transmission group.

The controller may be further configured to receive a charging request including information related to the wireless power receiver from the wireless charging vehicle, wherein the information related to the wireless power receiver may include information related to a size and number of wireless power reception coils.

The controller may be further configured to: obtain information related to a battery charging state of the wireless charging vehicle; and transmit a charging suggestion message to the wireless charging vehicle in response to the battery charging state not satisfying a preset reference value.

The controller may be further configured to: obtain information related to a battery charging state of the wireless charging vehicle; and activate the determined wireless power transmission group in response to the battery charging state not satisfying a preset reference value.

The controller may be further configured to: obtain information related to a battery charging state of the wireless charging vehicle; stop power transmission of the wireless power transmitter in response to the battery charging state satisfying a preset second reference value.

The controller may be further configured to: after stopping power transmission of the wireless power transmitter, calculate a battery charge amount; and transmit information related to the calculated battery charge amount to the wireless charging vehicle.

The controller may be further configured to: determine whether the wireless charging vehicle has moved from the wireless charging road; calculate a battery charge amount in response to the wireless charging vehicle having moved from the wireless charging road; and transmit information about the calculated battery charge amount to the wireless charging vehicle.

In yet another general aspect of the disclosure, a method for wirelessly charging a vehicle, includes: determining power transmission parameters based on information about a wireless power receiver of a wireless charging vehicle on a wireless charging road; obtaining information about a driving speed and location of the wireless charging vehicle; and determining a wireless power transmission group based on information about the wireless power receiver or the driving speed and location of the wireless charging vehicle, wherein the wireless power transmission group includes at least one wireless power transmitter.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is an overall block diagram illustrating an autonomous vehicle to which an autonomous driving apparatus can be applied.
FIG. 2 is a schematic diagram illustrating an example vehicle to which an autonomous driving apparatus is applied.
FIG. 3 is a schematic diagram illustrating a system for wireless charging.
FIG. 4 is a flowchart illustrating a method for controlling wireless charging according to the proposed technology.
FIG. 5 is a flowchart illustrating a method for controlling wireless charging according to the proposed technology.
FIG. 6 is a flowchart illustrating a method for controlling wireless charging according to the proposed technology.
FIG. 7 is a flowchart illustrating a method for controlling wireless charging according to the proposed technology.
FIG. 8 is a schematic diagram illustrating a system for wireless charging according to the proposed technology.
FIG. 9 is a flowchart illustrating a method for controlling wireless charging according to the proposed technology.
FIG. 10 is a flowchart illustrating a method for controlling wireless charging according to the proposed technology.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger" "driver" "user" etc. are mentioned for description of the present disclosure, and may be used interchangeably therewith.

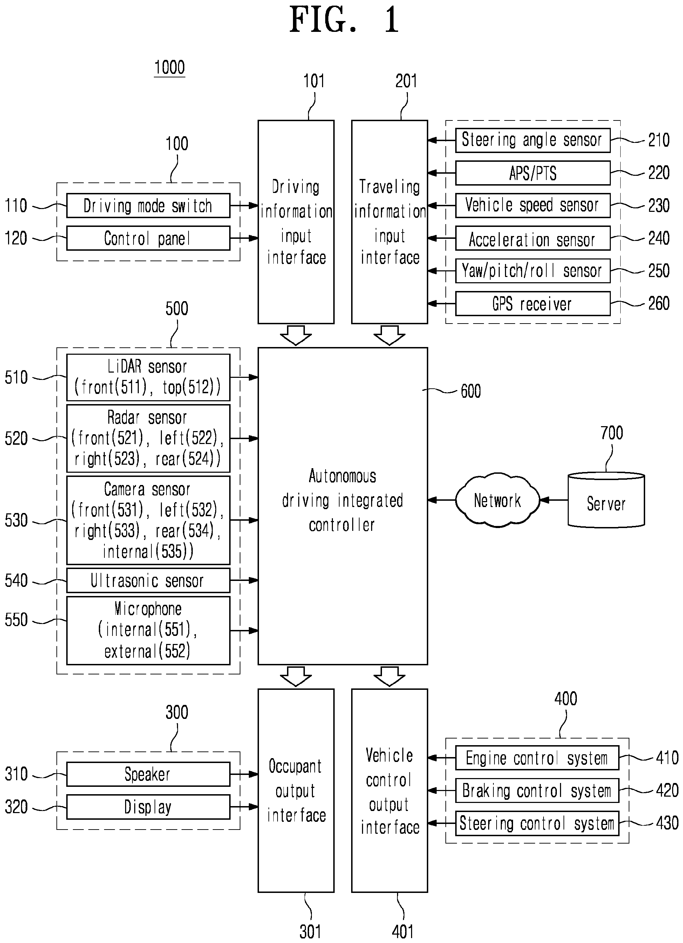

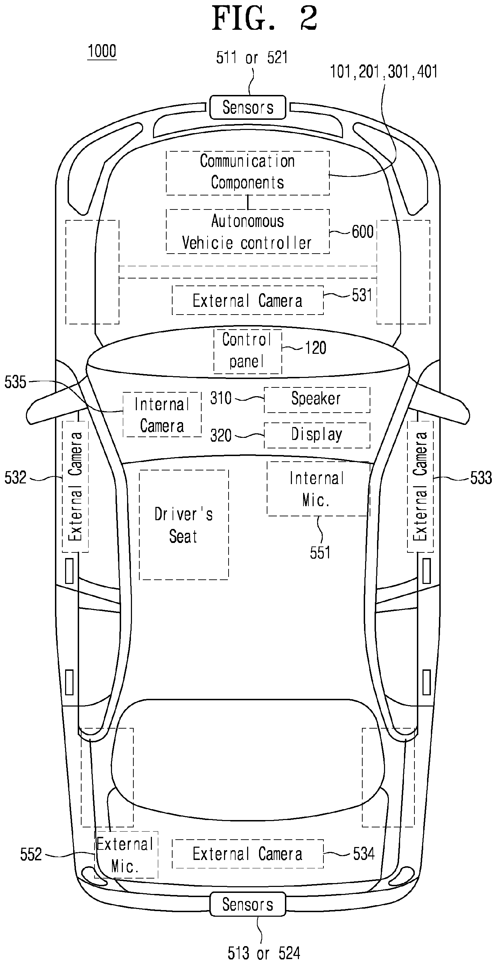

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

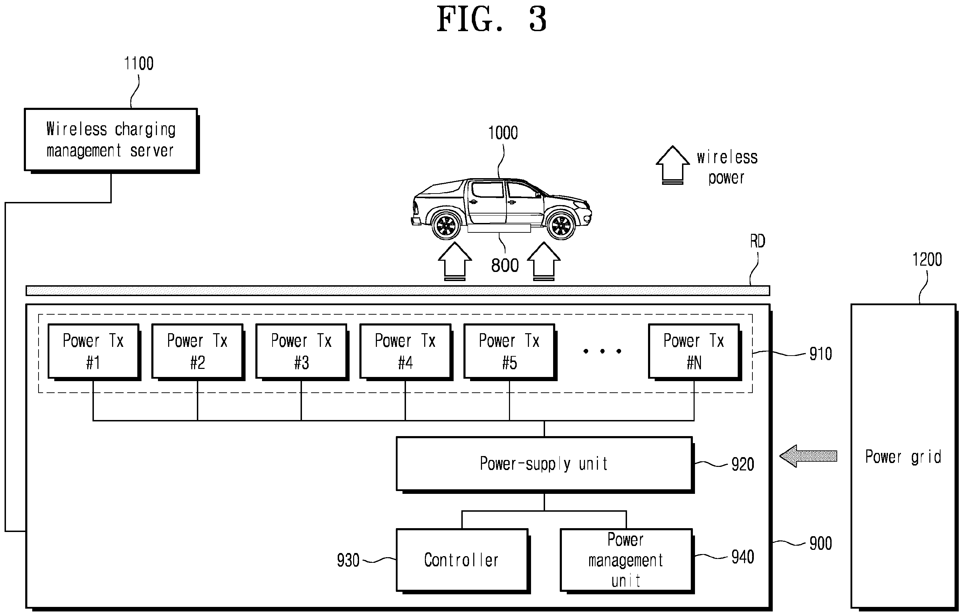

FIG. 3 is a schematic diagram illustrating a system for wireless charging during vehicle driving.

Referring to FIG. 3, the system may include a vehicle 1000 containing a rechargeable battery 800, a wireless charger 900 located below a road (RD), a wireless charging management server 1100, and a power grid 1200. Wireless charging refers to charging the vehicle's battery (800) wirelessly. However, in the explanation provided later, this will be simply referred to as (wirelessly) charging the vehicle or the vehicle performing the (wireless) charging. This term or expression will be used and interpreted to include the wireless charging of the vehicle's battery

A wireless transmission coil (or a wireless power transmitter) 910 of the wireless charger 900 may be buried under a road (RD). Accordingly, the vehicle 1000 may perform wireless charging while driving on the road (RD).

The wireless charger 900 may include a power-supply unit 920 for supplying power to the wireless transmission coil 910, a controller 930 for controlling the power-supply unit, and a power measurement unit 940 for power measurement.

The wireless charging management server 1100 may manage the wireless charger 900, and may control initiation and termination of wireless charging of the vehicle 1000.

The power grid 1200 refers to a power system, for example, a power transmission system, a power distribution system, and a power generation system that can supply power to the wireless charger 900.

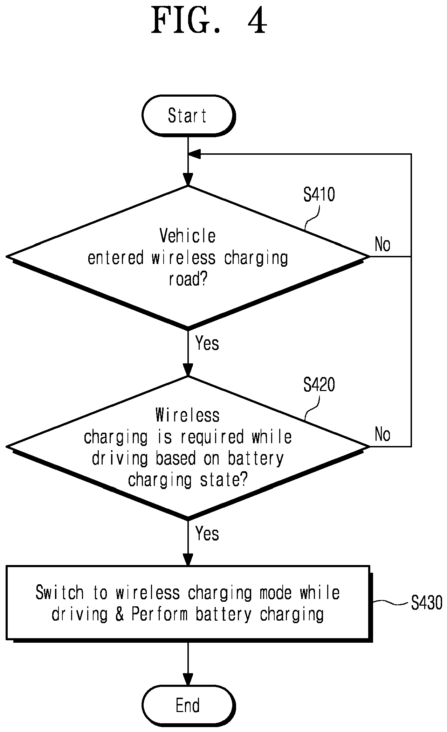

FIG. 4 is a flowchart illustrating a method for controlling wireless charging of a vehicle according to the proposed technology. The operation according to the flowchart of FIG. 4 may be performed by the wireless charging management server 1100 or components (e.g., a controller, a processor, etc.) of the wireless charging management server 1100, but is not limited thereto. The vehicle 1000 may include vehicle sensors 210 to 260 in addition to the battery 800. The vehicle sensor may include a positioning sensor 260 such as a GPS receiver and a speed sensor 230 for sensing the driving speed.

The wireless charging vehicle 1000 may include a transceiver for transmitting and receiving messages to and from the wireless charging management server 1100, the power grid 1200 or the wireless charger 900; and a controller for controlling the transceiver.

Additionally, the wireless charging vehicle 1000 may include a wireless power receiver that receives wireless power from the wireless power transmitter.

The wireless charging vehicle 1000 may check whether the vehicle 1000 has entered a wireless charging road (S410). The "wireless charging road" refers to a road where at least some of the wireless chargers (900) are embedded in the lower part of the road, as illustrated in Figure 3, allowing a rechargeable battery of vehicles to be wirelessly charged during driving on the road.

As the vehicle 1000 enters a wireless charging road, the wireless charging vehicle 1000 may detect a battery charge state. The wireless charging vehicle 1000 may determine whether wireless charging is required during driving based on the battery charge state (S420).

As wireless charging is required, the wireless charging vehicle 1000 and the wireless power transmitter 900 may perform a preparation procedure for a series of wireless charging actions.

Then, the wireless charging vehicle 1000 may switch to the wireless charging mode while driving, and may perform wireless charging (S430).

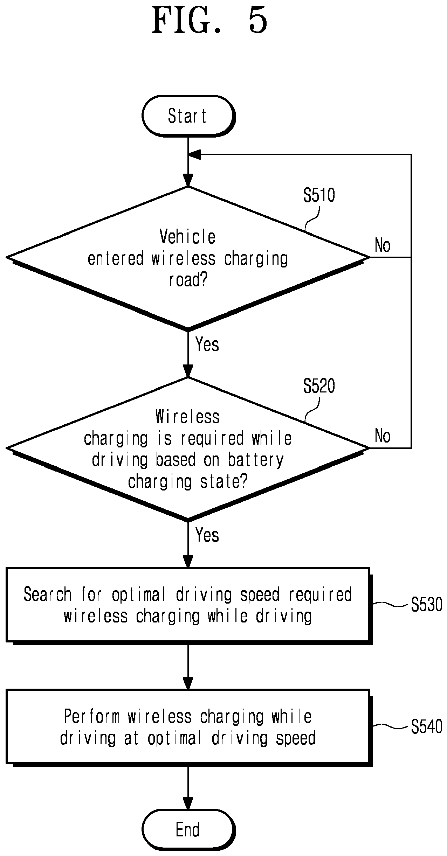

FIG. 5 is a flowchart illustrating a method for controlling wireless charging of a vehicle according to the proposed technology. The operation according to the flowchart of FIG. 5 may be performed by the wireless charging vehicle 1000 or components (e.g., a controller, a processor, etc.) of the wireless charging vehicle 1000, but is not limited thereto.

The wireless charging vehicle 1000 may check whether the vehicle 1000 has entered a road where wireless charging is possible (S510).

As the wireless charging vehicle 1000 enters a wireless charging road, the wireless charging vehicle 1000 may detect the battery charging state. The wireless charging vehicle 1000 may determine whether wireless charging is needed while driving based on the battery charging state (S520).

Additionally, when a driving route to a destination is set in advance, the wireless charging vehicle 1000 may additionally determine whether wireless charging is needed while driving based on the expected driving route.

As wireless charging is required, the wireless charging vehicle 1000 may search for or determine an optimal driving speed for wireless charging while driving (S530).

Meanwhile, the optimal charging speed (or efficiency) may vary depending on the battery charging state (remaining battery capacity). Accordingly, the optimal driving speed may be determined based on at least one of the battery charging state or the wireless power reception efficiency.

As wireless charging is required, the wireless charging vehicle 1000 and the wireless power transmitter 900 may perform a preparation procedure for a series of wireless charging actions.

Then, the wireless charging vehicle 1000 may perform wireless charging while searching for or driving at a determined driving speed (S540).

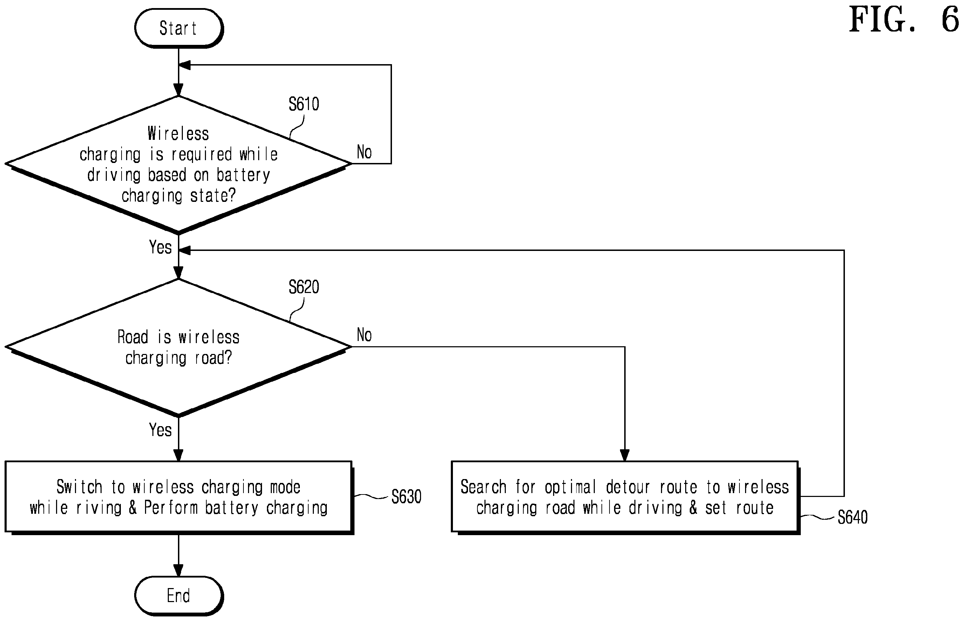

FIG. 6 is a flowchart illustrating a method for controlling wireless charging of a vehicle according to the proposed technology. The operation according to the flowchart of FIG. 6 may be performed by the wireless charging vehicle 1000 or components (e.g., a controller, a processor, etc.) of the wireless charging vehicle 1000, but is not limited thereto.

The wireless charging vehicle 1000 may detect the battery charging state. The wireless charging vehicle 1000 may determine whether wireless charging is needed while driving based on the battery charging state (S610).

Additionally, when determining whether wireless charging is needed during driving, driving route information may be additionally used if there is a driving route configured for the wireless charging vehicle 1000.

According to the determination that wireless charging is needed while driving, the wireless charging vehicle 1000 may check whether the road on which the wireless charging vehicle 100 is traveling is a wireless charging road (S620).

If the road on which the vehicle 100 is traveling corresponds to a wireless charging road, the wireless charging vehicle 1000 may switch to the wireless charging mode while driving and may perform wireless charging of the battery (S630).

If the road on which the vehicle are traveling does not correspond to a wireless charging road, the wireless charging vehicle 1000 may search for an optimal detour route to the wireless charging road while driving and may set the optimal detour route to a driving route (S640). Then, the wireless charging vehicle 1000 may travel along the corresponding driving route and enter the wireless charging road. Accordingly, the wireless charging vehicle 1000 may switch to the wireless charging mode while driving (S620) according to the determination that the road on which the vehicle 1000 is traveling is a wireless charging road (S620), and may perform wireless battery charging.

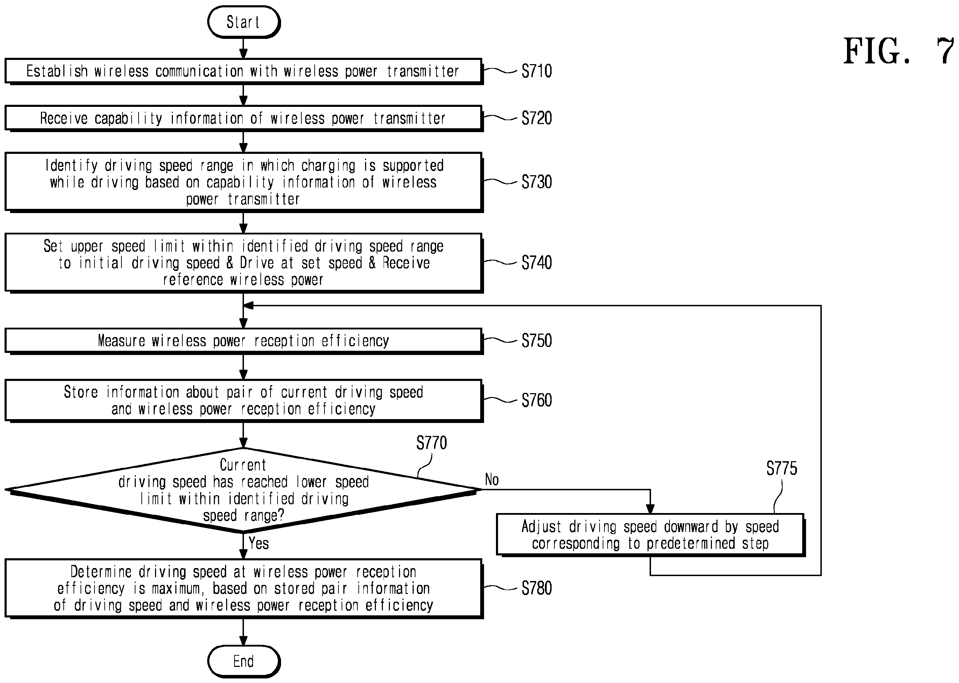

FIG. 7 is a flowchart illustrating a method for controlling wireless charging of a vehicle according to the proposed technology. The operation according to the flowchart of FIG. 7 may be performed by the wireless charging vehicle 1000 or components (e.g., a controller, a processor, etc.) of the wireless charging vehicle 1000, but is not limited thereto. FIG. 7 illustrates a procedure in which the wireless charging vehicle 1000 of FIGS. 4 to 6 switches to the wireless charging mode while driving or performs wireless charging in the wireless charging mode.

The wireless charging vehicle 1000 may establish wireless communication with the wireless power transmitter of the wireless charger (S710).

The wireless charging vehicle 1000 may receive information about the capability of the wireless power transmitter from either the wireless charger or the wireless power transmitter of the wireless charger through established wireless communication (S720). Capability information of the wireless power transmitter may include information about the number of coils, coil size, capacity (maximum output), etc. of the wireless power transmitter.

The wireless charging vehicle 1000 may identify a driving speed range in which wireless charging is possible while driving based on the capability information of the wireless power transmitter (S730).

The wireless charging vehicle 1000 may drive by setting an upper speed limit within the identified driving speed range to an initial driving speed, and may receive reference wireless power from the wireless charger while driving (S740).

The wireless charging vehicle 1000 may measure wireless power reception efficiency using the received reference wireless power (S750).

Meanwhile, if the wireless power reception efficiency measured in the step of measuring the wireless power reception efficiency exceeds a predefined reference value, the wireless charging vehicle 1000 may determine the current driving speed to be the optimal driving speed for in-driving charging (S780).

In this case, the wireless charging vehicle 1000 has advantages in that the vehicle can perform wireless charging while driving at a maximum driving speed at which the wireless power reception efficiency can be satisfied, without searching for the wireless charging efficiency for all driving speed ranges in which in-driving wireless charging is possible.

The wireless charging vehicle 1000 may pair the measured wireless power reception efficiency with the current driving speed information, and may store the paired information (S760). That is, the driving speed and the wireless power reception efficiency at this driving speed may be paired and stored as one pair.

Then, the wireless charging vehicle 1000 may determine whether the current driving speed has reached the lower speed limit within the identified driving speed range (S770).

As the current driving speed has not reached the lower speed limit within the identified driving speed range, the wireless charging vehicle 1000 may adjust the driving speed downward by a speed corresponding to a predetermined step and drive at the adjusted driving speed (S775). Then, the wireless charging vehicle 1000 may measure the wireless power reception efficiency again (S750). According to such regression or iterative process, the wireless charging vehicle may measure the wireless power reception efficiency at predetermined step intervals from the highest driving speed (upper speed limit) to the lowest speed (lower speed limit) within the identified driving speed range (S750). As a result, the wireless charging vehicle 1000 may store a plurality of information sets, each of which includes the driving speed and the wireless power reception efficiency.

As the current driving speed has reached the lower speed limit within the identified driving speed range, the wireless charging vehicle 1000 may determine, from among the paired information set of the stored driving speed and the wireless power reception efficiency, the driving speed at which a maximum wireless power reception efficiency can be obtained (S780).

The wireless charging vehicle 1000 may drive at a driving speed at which the maximum wireless power reception efficiency can be obtained, and may perform wireless charging while driving.

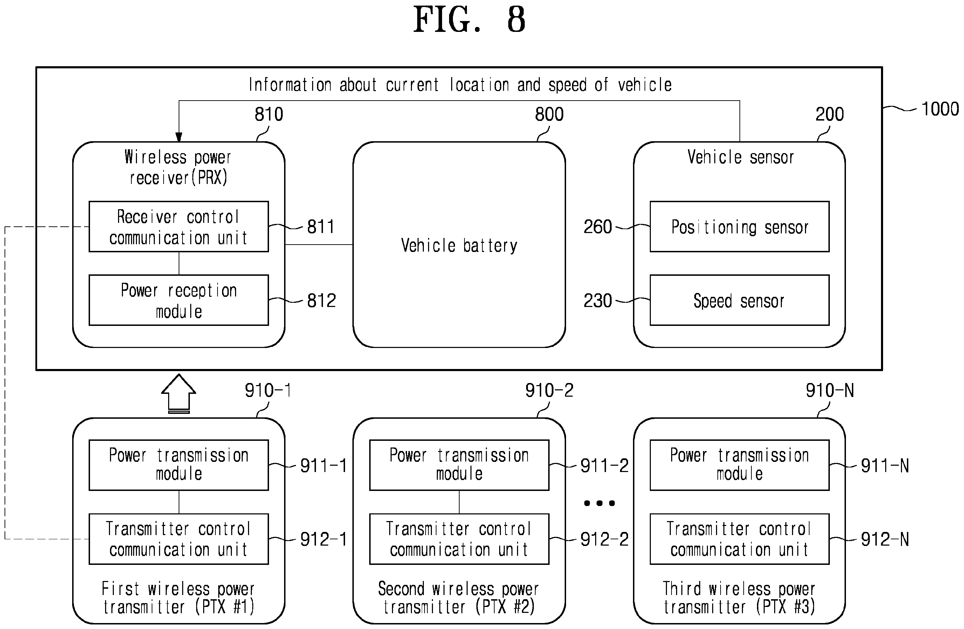

FIG. 8 is a schematic diagram illustrating a system according to the proposed technology.

Referring to FIG. 8, the vehicle 1000 may include a vehicle sensor 200 and a wireless power receiver 810 in addition to the battery 800. As mentioned above, the vehicle sensor 200 may include a positioning sensor 260 such as a GPS receiver and a speed sensor 230 for sensing the driving speed.

The wireless power receiver 810 may include a receiver control communication unit 811 and a power reception module 812. The receiver control communication unit 811 may include a controller for controlling the wireless power receiver 810 or components of the wireless power receiver 810; and a transceiver.

Each of the wireless power transmitters (910-1, 910-2, .., 910-N) may include a power transmission module 911 and a transmitter control communication unit 912. The transmitter control communication unit 912 may include a controller for controlling the wireless power receiver 810 or components of the wireless power receiver 810; and a transceiver.

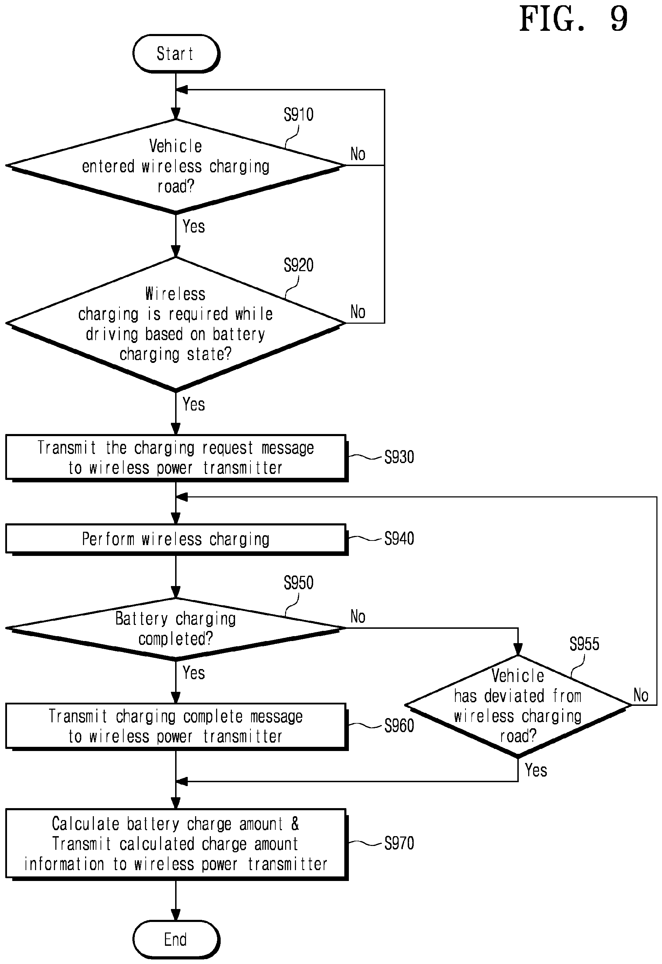

FIG. 9 is a flowchart illustrating a method for controlling wireless charging of a vehicle according to the proposed technology. The operation according to the flowchart of FIG. 9 may be performed by the wireless charging vehicle 1000 or components (e.g., a controller, a processor, etc.) of the wireless charging vehicle 1000, but is not limited thereto.

The wireless charging vehicle 1000 may include a transceiver for transmitting and receiving messages to and from the wireless charging management server 1100, the power grid 1200 or the wireless charger 900; and a controller for controlling the transceiver. Additionally, the wireless charging vehicle 1000 may include a wireless power receiver that receives wireless power from the wireless power transmitter.

The wireless charging vehicle 1000 may check whether the vehicle 1000 has entered a road where wireless charging is possible (S910).

As the vehicle 1000 enters a wireless charging road, the wireless charging vehicle 1000 may detect a battery charge state. The wireless charging vehicle 1000 may determine whether wireless charging is required during driving based on the battery charge state (S920).

As wireless charging is required, the wireless charging vehicle 1000 may transmit a charging request message to the wireless power transmitter (S930).

Upon receiving the charging request message, the wireless charging vehicle 1000 and the wireless power transmitter 900 may perform a preparation procedure for a series of wireless charging actions.

Then, the wireless charging vehicle 1000 may perform wireless charging (S940).

The wireless charging vehicle 1000 may detect the battery state and thus check whether battery charging is completed (S950).

If battery charging is not completed, the wireless charging vehicle 1000 may check whether the vehicle 1000 has deviated from a wireless charging road (S955). If the vehicle 1000 deviates from the wireless charging road, the wireless charging vehicle 1000 may calculate the battery charge amount and transmit information about the calculated battery charge amount to the wireless power transmitter (S970).

When battery charging is completed, the wireless charging vehicle 1000 may transmit a charging completion message to the wireless power transmitter (S960).

Then, the wireless charging vehicle 1000 may calculate a battery charge amount and transmit information about the calculated battery charge amount to the wireless power transmitter (S970).

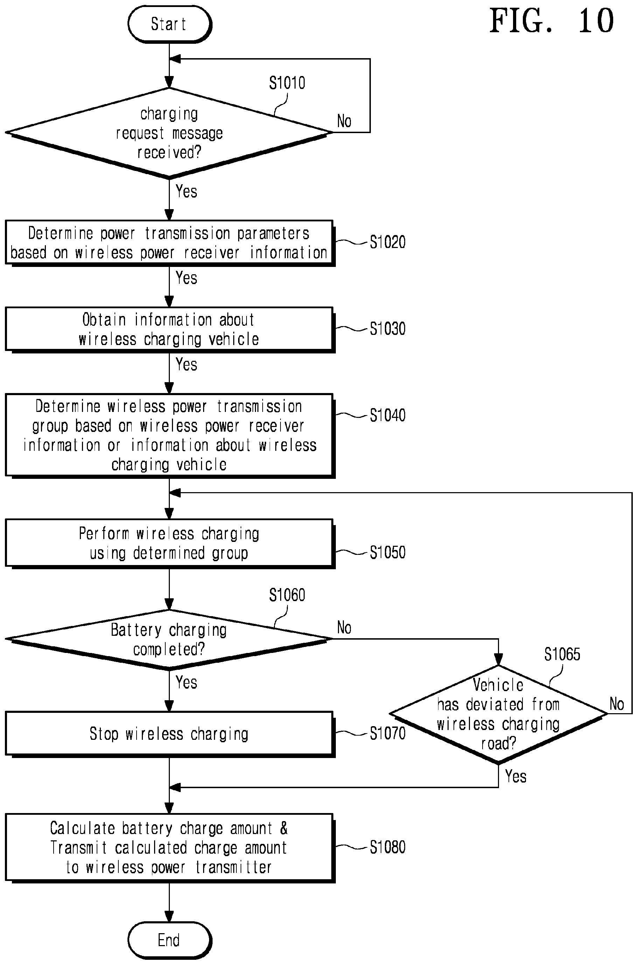

FIG. 10 is a flowchart illustrating a method for controlling wireless charging according to the proposed technology. The operation according to the flowchart of FIG. 10 may be performed by the wireless charging device 900 or components (e.g., a controller, a processor, etc.) of the wireless charging device 900, but is not limited thereto. The wireless charging management server 1100 may be integrated with the wireless charger 900.

The wireless charging vehicle 900 may include a transceiver for transmitting and receiving messages to and from the wireless charging management server 1100, the power grid 1200 or the vehicle 1000; and a controller for controlling the transceiver. Additionally, the wireless charger 900 may include a wireless power transmitter that supplies wireless power to the wireless charging vehicle on the wireless charging road.

The wireless charger 900 may check whether a charging request message has been received from the wireless charging vehicle 1000 (S1010).

The charging request message may include information about the wireless power receiver. Information about the wireless power receiver may include information about the size and number of wireless power reception coils.

Additionally, transmission of the charging request message may be triggered by a charging suggestion message from the wireless charger 900. When the vehicle 1000 enters the wireless charging road, the wireless charger 900 may obtain information about the battery charging state of the wireless charging vehicle 1000. If the obtained battery charging state does not meet a preset reference (e.g., 30% or more of the total battery capacity), the wireless charger 900 may transmit a charging suggestion message to the wireless charging vehicle 1000.

The wireless charger 900 may determine power transmission parameters based on information about the wireless power receiver of the wireless charging vehicle (S1020). Power transmission parameters may include resonant frequency, amplitude, etc. of the power signal.

Additionally, the wireless charger 900 may obtain information about the wireless charging vehicle 1000 (S1030). Information about the wireless charging vehicle 1000 may include the driving speed and location of the vehicle 1000.

The wireless charger 900 may determine a wireless power transmission group based on wireless power receiver information or information about the wireless charging vehicle (S1040). The wireless power transmission group may include at least one wireless power transmitter and may include consecutive wireless power transmitters like the transmission group in FIG. 3. As described above, the wireless power transmission group is intended to increase the wireless charging efficiency, but the use or purpose thereof is not limited thereto.

Thereafter, additionally, the wireless charger 900 may activate the determined wireless power transmission group if the battery charging state of the wireless charging vehicle 1000 does not meet a preset reference (e.g., 30% or more of the total battery capacity).

The wireless charger 900 may perform wireless charging using the determined wireless power transmission group (S1050). This means that the wireless charger 900 transfers wireless power to the wireless charging vehicle 1000.

The wireless charger 900 may check whether the battery state of the wireless charging vehicle 1000 satisfies a preset second reference (e.g., 90% or more of the total battery capacity) (S1060). This means checking whether the battery charging of the wireless charging vehicle 1000 is completed.

If battery charging is not completed, the wireless charger 900 may check whether the vehicle 1000 has deviated from the wireless charging road (S1065). If the vehicle 1000 deviates from the wireless charging road, the wireless charger 900 may calculate the battery charge amount and transmit information about the calculated battery charge amount to the wireless charging vehicle 1000 (S1080).

When battery charging is completed, the wireless charger 900 may terminate wireless charging (S1070). In this case, the wireless charger 900 may transmit a charging completion message to the wireless charging vehicle 1000.

Then, the wireless charger 900 may calculate the battery charge amount and transmit information about the calculated battery charge amount to the wireless charging vehicle 1000 (S1080).

Although the above-described embodiments of the present disclosure have disclosed that the device (or apparatus) for controlling a user interface (UI) and components included therein perform such control for convenience of description, the device (or apparatus) and the components belonging thereto are names only and the scope of rights is not dependent thereon.

In other words, the proposed technology of the present disclosure may be performed by devices having names other than the control device. In addition, the method, scheme, or the like described above may be performed by software or code readable by a computer or other machine or device for vehicle control.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

As is apparent from the above description, the method and apparatus according to the embodiments of the present disclosure have the following effects.

The embodiments of the present disclosure can appropriately control or manage wireless charging efficiency or wireless power reception efficiency according to the driving information or the driving environment.

The embodiments of the present disclosure can determine the vehicle's driving speed at which wireless charging efficiency or wireless power reception efficiency is sufficient.

In addition, the vehicle according to the embodiments of the present disclosure can perform wireless charging at a driving speed that secures a certain level of wireless power reception efficiency without searching for wireless charging efficiency or wireless power reception efficiency for all driving speed ranges in which wireless charging of the vehicle is possible during vehicle driving.

It will be apparent to those skilled in the art that various modifications and variations can be made in the present disclosure without departing from the spirit or scope of the disclosures. Thus, it is intended that the present disclosure covers the modifications and variations of this disclosure provided they come within the scope of the appended claims and their equivalents.

## Claims

1. A vehicle for wireless charging, comprising:
a wireless power receiver configured to wirelessly receive power from a wireless power transmitter;
a transceiver configured to communicate with the wireless power transmitter; and
a controller configured to:
control the wireless power receiver;
detect a battery charging state and determine whether wireless charging is needed while driving the vehicle;
search for or determine an optimal driving speed for wireless charging while driving the vehicle; and
perform wireless charging while driving the vehicle at the searched speed or the determined optimal driving speed.

2. The vehicle according to claim 1, wherein the controller is further configured to:
determine whether wireless charging is needed based additionally on a driving route configured for the vehicle.

3. The vehicle according to claim 1 or 2, wherein the optimal driving speed is determined based on at least one of the battery charging state, a wireless power reception efficiency, or a combination thereof.

4. The vehicle according to any one of claims 1 to 3, wherein, in response to the vehicle not entering a wireless charging road, the controller is further configured to search for an optimal detour route to the wireless charging road while driving, and sets the optimal detour route as a route for the vehicle .

5. The vehicle according to any one of claims 1 to 4, wherein the controller is further configured to:
identify a driving speed range in which wireless charging is supported while driving based on capability information of the wireless charging transmitter for wireless charging.

6. The vehicle according to claim 5, wherein the controller is further configured to:
control driving of the vehicle by setting an upper speed limit within the identified driving speed range according to an initial driving speed;
receive reference wireless power from the wireless charging transmitter while driving; and
measure wireless power reception efficiency based on the reference wireless power.

7. The vehicle according to claim 6, wherein the controller is further configured to:
measure wireless charging reception efficiency using the reference wireless power while driving at driving speed which is adjusted downward by a predetermined amount until the driving speed reaches the lower speed limit within the identified driving speed range; and
perform pairing of the driving speed and information related to the wireless power reception efficiency at the driving speed, and store the paired information.

8. The vehicle according to claim 7, wherein the controller is further configured to:
detect a driving speed at which wireless power reception efficiency is at a maximum from information related to the driving speed and the wireless power reception efficiency; and
control the vehicle to perform wireless charging while driving at the detected driving speed.

9. An apparatus for wireless charging, comprising:
a wireless power transmitter configured to wirelessly transmit power to a wireless charging vehicle on a wireless charging road;
a transceiver configured to communicate with the wireless charging vehicle; and
a controller configured to:
control the wireless power transmitter and the transceiver;
determine power transmission parameters based on information related to a wireless power receiver of the wireless charging vehicle;
obtain information related to a driving speed and location of the wireless charging vehicle; and
determine a wireless power transmission group based on information related to the wireless power receiver of the wireless charging vehicle, the driving speed and location of the wireless charging vehicle, or a combination thereof,
wherein the wireless power transmission group includes at least one wireless power transmitter.

10. The apparatus according to claim 9, wherein the controller is further configured to:
perform wireless charging based on the wireless power transmission group.

11. The apparatus according to claim 9 or 10, wherein the controller is further configured to:
receive a charging request including information related to the wireless power receiver from the wireless charging vehicle,
wherein the information related to the wireless power receiver includes information related to a size and number of wireless power reception coils.

12. The apparatus according to any one of claims 9 to 11, wherein the controller is further configured to:
obtain information related to a battery charging state of the wireless charging vehicle; and
transmit a charging suggestion message to the wireless charging vehicle in response to the battery charging state not satisfying a preset reference value.

13. The apparatus according to any one of claims 9 to 12, wherein the controller is further configured to:
obtain information related to a battery charging state of the wireless charging vehicle; and
activate the determined wireless power transmission group in response to the battery charging state not satisfying a preset reference value.

14. The apparatus according to any one of claims 9 to 13, wherein the controller is further configured to:
obtain information related to a battery charging state of the wireless charging vehicle;
stop power transmission of the wireless power transmitter in response to the battery charging state satisfying a preset second reference value.

15. The apparatus according to claim 14, wherein the controller is further configured to:
after stopping power transmission of the wireless power transmitter, calculate a battery charge amount; and
transmit information related to the calculated battery charge amount to the wireless charging vehicle.
